(19) Europäisches Patentamt
European Patent Office
Office européen des brevets

(11) **EP 1 816 166 A1**

(12) **EUROPEAN PATENT APPLICATION**
published in accordance with Art. 158(3) EPC

(43) Date of publication:
**08.08.2007 Bulletin 2007/32**

(21) Application number: **05809499.6**

(22) Date of filing: **22.11.2005**

(51) Int Cl.:
***C08L 77/00*** *(2006.01)* ***B29B 7/38*** *(2006.01)*
***B29C 47/00*** *(2006.01)* ***C08K 3/00*** *(2006.01)*
***C08L 71/12*** *(2006.01)* ***C08L 77/06*** *(2006.01)*
***B29K 71/00*** *(2006.01)* ***B29K 77/00*** *(2006.01)*

(86) International application number:
**PCT/JP2005/021476**

(87) International publication number:
**WO 2006/057254 (01.06.2006 Gazette 2006/22)**

(84) Designated Contracting States:
**DE FR**

(30) Priority: **25.11.2004 JP 2004340396**

(71) Applicant: **Asahi Kasei Chemicals Corporation**
**Tokyo 100-8440 (JP)**

(72) Inventors:
- **MIYOSHI, Takaaki**
**1008440 (JP)**
- **OOI, Shukeat**
**1008440 (JP)**

(74) Representative: **Weber, Thomas**
**Patentanwälte von Kreisler-Selting-Werner,**
**Deichmannhaus am Dom,**
**Bahnhofsvorplatz 1**
**50667 Köln (DE)**

(54) **RESIN COMPOSITION SUITABLE FOR FORMING SHEET**

(57) A resin composition comprising a polyamide, a polyphenylene ether, an elastomer, and an inorganic filler having a mean particle diameter of 0.05 to 1 μm, **characterized in that** the polyamide is a polyamide mixture of two or more polyamides each having a different relative viscosity, the polyamide mixture has a larger content of the polyamide having a higher relative viscosity than that of the polyamide having a lower relative viscosity, and the polyamide mixture has a relative viscosity of 3.3 to 5.0.

EP 1 816 166 A1

## Description

Technical Field

The present invention relates to a resin composition that has together incompatible features of good sheet extrudability considerably reducing generation of die drool at a die at the time of sheet extrusion; and an extremely excellent vacuum formability, and further has a high impact strength. Furthermore, the present invention also relates to a shaped article composed of the resin composition and a method for manufacturing the resin composition in which the composition is processed at considerably reduced resin temperature.

Background Art

A polyamide-polyphenylene ether alloy resin composition has an excellent flowability and a high impact strength, and thus has become a polymer alloy that has a very wide range of applications. That is, the alloy is used not only in injection molding but also in extrusion which is represented by sheet extrusion.
In extrusion which is represented by sheet extrusion, a composition having normal melt viscosity, namely not high melt viscosity, is adequate to be subjected to extrusion process. In extrusion, there is a tendency that low melt viscosity is rather preferable.
However, for example, in vacuum forming, which is one of fabrication processes, use of a sheet from a composition having low melt viscosity causes problems such that a phenomenon called drawdown occurs excessively at the time of preheating, and thus vacuum forming cannot be conducted or wrinkles are generated in shaped pieces. That is, in applications that require vacuum forming or the like, sheets with a composition having a common level of melt viscosity are not proper.
In order to improve the melt viscosity properties represented by the drawdown property, as conventional techniques, for example, there is disclosed that a mixture of a high molecular weight polyphenylene ether and a high molecular weight polyamide provides a composition suitable for extrusion (See Patent Document 1).
That is, conventionally known is a method of increasing the melt viscosity simply by increasing the molecular weight and the like of a resin for the purpose of obtaining a resin composition suitable for vacuum forming.
However, simply increasing the viscosity of a resin invites a problem of generation of carbonized matter called a die drool at the time of sheet extrusion prior to vacuum forming. The die drool is generated at the time of extrusion around a nozzle of a T-die.
The die drool is thought to be generated due to the die swelling phenomenon of a resin that comes out from the T-die. The die drool, which is generated at the T-die portion, generally grows and is carbonized with the passage of time. After a certain period of time, the die drool comes off from the nozzle to get into the product. The carbonized matter entrapped in the product is transferred even into shaped articles therefrom and deteriorates the appearance of the shaped articles considerably. Therefore, fundamental solution to the die drool has been demanded.
In summary, lower melt viscosity provides excellent processability in sheet extrusion while higher melt viscosity provides excellent processability in fabrication processes such as vacuum forming. In regard to the melt viscosity, incompatible opposite properties are required.
Furthermore, the method of simply increasing the molecular weight of a resin as disclosed in Patent Document 1 has a problem of reducing the impact strength of the composition itself, and improvements have been demanded.
The reason of causing such a problem is uncertain. But it is estimated that a polyamide having high relative viscosity has low concentration of end amino groups, which is concentration of active end groups required for the polyamide to react with the polyphenylene ether, there are not sufficient generation of polyamide-polyphenylene ether grafts required to stabilize the interface between the polyamide and the polyphenylene ether.
That is, the following composition has been demanded: reducing generation of a die drool and the like and thus suitable for the sheet extrusion; having proper drawdown properties and thus having excellent vacuum forming properties; and having a high impact strength.
Furthermore, in the case of using a polymer having a high molecular weight, the composition itself has high melt viscosity. As a result, there are problems in extrusion processes manufacturing resin pellets such that resin temperature increases excessively at the time of processing and thus the resin is thermally decomposed, whereby strands that come out form a die of an extruder discolor or the composition has reduced impact resistance. The thermal decomposition product generated at this time is estimated to be a contributory factor not only in discoloring and reduction of impact resistance but also in the die drool which is generated around a T-die at the time of sheet extrusion and the like.
In order to reduce such phenomena, it is important to decrease the molten resin temperature in extruding, thereby reducing generation of the decomposition product and the like at the time of extrusion. For that purpose, generally taken is a measure of decreasing the revolution of the screw of the extruder and the like.
Furthermore, in the case of using the polyamide-polyphenylene ether composition, which is a reactive polymer

alloy, taking the measure of decreasing the revolution of the screw at the time of extrusion causes insufficient kneading of the resin. This leads to problems of decrease of the impact strength of the composition, which is contrary to what is intended, a phenomenon called "surging" in which a discharge rate changes periodically and frequent tears of strands.

In summary, there has been demanded a method for manufacturing the compositions having high melt viscosity that totally resolves the adverse effects.

Patent Document 1: Japanese Patent Laid-Open No. 08-34917

The present invention relates to a resin composition comprising a polyamide, a polyphenylene ether, an elastomer, and an inorganic filler having a specific particle diameter. The polyamide is a polyamide mixture of two or more polyamides each having different relative viscosity, thereby resolving problems such as generation of a die drool at the time of extrusion and decrease of impact resistance, and furthermore achieving an object of reduction of drawdown at the time of conducting vacuum forming or the like. In addition, melt-kneading is conducted by following a specific sequence and an extruder having a specific screw design is used, whereby the impact strength of the resin composition is improved, and discoloring of strands and generation of decomposition product are reduced.

Disclosure of the Invention

In order to achieve the objects, the inventors of the present invention have thoroughly examined. As a result, they have found that the objects are achieved by using a polyamide mixture having a specific viscosity, a polyphenylene ether, and an elastomer, where the polyamide mixture comprises a high viscosity polyamide and a low viscosity polyamide in specific proportions; or by conducting specific manufacturing method. Thus the inventors have accomplished the present invention.

That is, the present invention relates to a resin composition comprising a polyamide, a polyphenylene ether, an elastomer, and an inorganic filler having a mean particle diameter of 0.05 to 1 μm, characterized in that the polyamide is a polyamide mixture of two or more polyamides each having different relative viscosity, the polyamide mixture has a larger content of the polyamide having higher relative viscosity than that of the polyamide having lower relative viscosity, and the polyamide mixture has a relative viscosity of 3.3 to 5.0.

The present invention also relates to a sheet composed of the resin composition and a method for manufacturing the resin composition.

The present invention makes it possible to obtain a resin composition having good sheet extrudability considerably reducing generation of die drool at a die at the time of sheet extrusion, a high impact strength and an extremely excellent vacuum formability; a sheet and a shaped article that are composed of the resin composition. The present invention also provides a manufacturing method that allows for reduction of decomposition product at the time of processing, thereby providing a resin composition having a higher impact resistance. For this reason, the present invention is extremely useful.

Best Mode for Carrying Out the Invention

As mentioned above, the present invention relates to a resin composition comprising a polyamide, a polyphenylene ether, an elastomer, and an inorganic filler having a mean particle diameter of 0.05 to 1 μm, characterized in that the polyamide is a polyamide mixture of two or more polyamides each having different relative viscosity, the polyamide mixture has a larger content of the polyamide having higher relative viscosity than that of the polyamide having lower relative viscosity, and the polyamide mixture has a relative viscosity of 3.3 to 5.0.

Hereinafter, each component that can be used in the present invention will be described in detail.

In the present invention, the polyamide is required to be a polyamide mixture of two or more polyamides each having different relative viscosity (ηr). Furthermore, among all the polyamides in the resin composition, the content of a polyamide having higher ηr is required to be larger than that of a polyamide having lower ηr.

The relative viscosity (ηr) in the present invention is a value that is measured in accordance with JIS K6920-1: 2000. Specifically, the relative viscosity (ηr) is represented by

$$\eta r = t_1/t_0$$

where a polyamide is dissolved in 98% concentrated sulfuric acid at a concentration of 1 g/100 $cm^3$, the flow time $t_1$ of this solution is measured with an Ostwald viscometer at 25°C, and the flow time to of 98% concentrated sulfuric acid only is measured at 25°C.

Furthermore, in the present invention, the polyamide mixture is required to have a ηr in the range of 3.3 to 5.0, more preferably 3.8 to 4.8, and most preferably 4.0 to 4.5.

In order to not to lower productivity of the resin composition, the polyamide mixture is required to have a ηr not more than 5.0. In order to not to lower the impact strength of the resin composition, the polyamide is required to have a ηr not less than 3.3.

The ηr of a polyamide mixture according to the present invention is obtained by a method of isolating a polyamide component in the composition and measuring the component.

In the present invention, it is important to mix a polyamide having lower ηr and a polyamide having higher ηr in specific content proportions.

Use of thus-obtained polyamide mixture having a ηr provides obviously advantageous effects in comparison with use of a polyamide alone having the same ηr. Specifically, the polyamide mixture is advantageous in that a resin temperature can be reduced considerably at the time of extrusion under the same conditions, generation of die drool at the time of processing can be considerably reduced, and the impact resistance of a composition can be dramatically increased.

As for the blending proportion of the polyamide having lower ηr and the polyamide having higher ηr in the present invention, the polyamide mixture is required to have a larger content of the polyamide having higher ηr than that of the polyamide having lower ηr.

A preferred proportion of the content of the polyamide having lower ηr to that of the polyamide having higher ηr is in the range of 0.1 to 0.9, and more preferably in the range of 0.2 to 0.7.

The polyamide having lower ηr and the polyamide having higher ηr in the polyamide mixture in the present invention are defined by classifying polyamides that are used with their ηrs and the used parts by mass of the polyamides by using the following formula. That is, an average η obtained by the following formula is used as the reference, a polyamide having ηr equal to or lower than the average η is classified as the polyamide having lower ηr, and a polyamide having higher ηr than the average ηr is classified as the polyamide having higher ηr.

$$\eta r_{AVE} = \eta r_{PA1} \times (W_{PA1}/W_{ALL}) + \eta r_{PA2} \times (W_{PA2}/W_{ALL}) \cdots + \eta r_{PAn} \times (W_{PAn}/W_{ALL})$$

(In the formula, $\eta r_{AVE}$ represents an average ηr; $\eta r_{PA1}$ represents the ηr of the first polyamide; $W_{PA1}$ represents the parts by mass of the first polyamide in the composition; WALL represents the parts by mass of all the polyamides that are used; $\eta r_{PA2}$ represents the ηr of the second polyamide; $W_{PA2}$ represents the parts by mass of the second polyamide in the composition; likewise, $\eta r_{PAn}$ represents the ηr of the nth polyamide; and $W_{PAn}$ represents the parts by mass of the nth polyamide in the composition.)

In the present invention, among two or more polyamides that can constitute the polyamide mixture, the polyamide having higher ηr preferably has a ηr more than 3.5 and not more than 6.0, more preferably not less than 4.0 and not more than 6.0, and most preferably not less than 4.0 and not more than 5.0. On the other hand, the polyamide having lower ηr preferably has a ηr not less than 2.0 and not more than 3.5, more preferably not less than 2.0 and not more than 3.0, and most preferably not less than 2.5 and not more than 3.0.

In the present invention, it is also effective to use a melt-kneaded polyamide such as a masterbatch in which two or more polyamides that have different ηrs are melt-kneaded in advance.

As for the polyamide type that can be used in the present invention, any polyamide having an amide bond {-NH-C(=O)-} in a polymeric repeating unit may be used.

In general, polyamides are obtained by ring opening polymerization of lactams, condensation polymerization of diamines and dicarboxylic acids, condensation polymerization of aminocarboxylic acids, and the like. However, the polyamides are not restricted thereto.

The diamines are broadly divided into aliphatic, alicyclic, and aromatic diamines. Examples thereof may include: tetramethylenediamine, hexamethylenediamine, undecamethylenediamine, dodecamethylenediamine, tridecamethylenediamine, 2,2,4-trimethyl hexamethylenediamine, 2,4,4-trimethyl hexamethylenediamine, 5-methylnanomethylenediamine, 1,3-bisamino methylcyclohexane, 1,4-bisamino methylcyclohexane, m-phenylenediamine, p-phenylenediamine, m-xylylenediamine, p-xylylenediamine, and the like.

The dicarboxylic acids are broadly divided into aliphatic, alicyclic, and aromatic dicarboxylic acids. Examples thereof may include: adipic acid, suberic acid, azelaic acid, sebacic acid, dodecanoic diacid, 1,1,3-tridecanoic diacid, 1,3-cyclohexane dicarboxylic acid, terephthalic acid, isophthalic acid, naphthalene dicarboxylic acid, dimer acid, and the like.

Examples of the lactams may include: ε-caprolactam, enanthic lactam, ω-laurolactam, and the like.

Examples of the aminocarboxylic acids may include: ε-aminocaproic acid, 7-aminoheptanoic acid, 8-aminooctanoic acid, 9-aminononanoic acid, 11-aminoundecanoic acid, 12-aminododecanoic acid, 13-aminotridecanoic acid, and

the like.

In the present invention, there may be used any polyamides or polyamide copolymers obtained by subjecting one or a mixture of two or more of the above-mentioned lactams, diamines, dicarboxylic acids, and ω-aminocarboxylic acids to condensation polymerization.

Examples of polyamide resins particularly useful for the present invention may include: polyamide 6, polyamide 66, polyamide 46, polyamide 11, polyamide 12, polyamide 610, polyamide 612, polyamide 6/66, polyamide 6/612, polyamide MXD (m-xylylenediamine),6, polyamide 6T, polyamide 61, polyamide 6/6T, polyamide 6/61, polyamide 6·6/6·T, polyamide 6·6/6·I, polyamide 6/6·T/6·I, polyamide 6·6/6·T/6·I, polyamide 6/12/6·T, polyamide 6·6/12/6·T, polyamide 6/12/6·I, polyamide 6·6/12/6·I, and the like. There may also be used polyamides obtained by mixing plural polyamides with an extruder or the like. Preferred polyamides are polyamide 6, polyamide 66, and polyamide 6/6·6. In the case of using a single polyamide to make a mixture of polyamides that have different ηrs, use of polyamide 6 is most preferable. In the present invention, the polyamide mixture to be used desirably contains polyamides that have different melting points. Specifically, the polyamide mixture desirably comprises a low melting polyamide having a melting point not less than 150°C and less than 250°C, and a high melting polyamide having a melting point not less than 250°C and not more than 350°C.

More preferably, the polyamide mixture comprises a low melting polyamide having a melting point not less than 200°C and less than 250°C, and a high melting polyamide having a melting point not less than 250°C and not more than 300°C.

As for examples of such polyamides, examples of the low melting polyamide having a melting point not less than 150°C and less than 250°C may include polyamide 6, polyamide 11, polyamide 12, and the like; and examples of the high melting polyamide having a melting point not less than 250°C and not more than 350°C may include polyamide 66, polyamide 46, polyamide 6T, polyamide 9T, and the like.

A polyamide that changes its melting point depending on the content of a comonomer can be confirmed that the polyamide is classified into either the high melting polyamide or the low melting polyamide by actually measuring the melting point.

Among the above-mentioned polyamides, the low melting polyamide desirably comprises at least a polyamide 6; and the high melting polyamide desirably comprises at least a polyamide 6, 6.

Furthermore, in the present invention, it is also effective to use a melt-kneaded polyamide such as a masterbatch in which two or more polyamides that have different melting points are melt-kneaded in advance.

The melting point in this specification is measured with a differential scanning calorimeter (DSC). Specifically, a sample is kept at 320°C for 5 minutes, subsequently the temperature is decreased at a rate of 10°C/minute down to 40°C and then the sample is kept at 40°C for 5 minutes. After that, the temperature is increased at a rate of 10°C/minute up to 320°C and the peak top temperature of thus-obtained endothermic peak is measured. The peak top temperature of the endothermic peak is defined as the melting point in the present invention. The measurements were conducted in regard to polyamides to be used as materials not in regard to the polyamide mixture.

Furthermore, in the present invention, it is desirable that the polyamides that have different melting points have specific content proportions by weight. Specifically, the polyamide mixture has a 5 to 18 mass % content of the high melting polyamide having a melting point not less than 250°C and not more than 350°C relative to 100 mass % of the polyamide mixture. The content is preferably in the range of 6 to 14 mass %, and most preferably 7 to 13 mass %.

In order to enhance vacuum formability, it is desirable that the content of the high melting polyamide having a melting point not less than 250°C and not more than 300°C is 5 mass % or more. Specifically, this facilitates reduction of the phenomenon that the amount of drawdown increases at the time of preheating in vacuum forming.

Furthermore, in order to reduce further the generation of the die drool at a T-die at the time of extrusion, it is desirable that the content of the high melting polyamide having a melting point not less than 250°C and not more than 300°C is reduced to 18 mass % or less. Specifically, this decreases possibility that the die drool deteriorates the appearance of sheets.

In addition, any combinations are acceptable among two or more polyamides that have different melting points and polyamides that have different ηrs, where the polyamides can constitute the polyamide mixture. For example, the polyamide having higher ηr may be the high melting polyamide having a melting point not less than 250°C and not more than 300°C, or the low melting polyamide having a melting point not less than 150°C and less than 250°C. The effects of the present invention are maximized in the case that the polyamide mixture comprises the polyamide having higher ηr which is the low melting polyamide having a melting point not less than 200°C and less than 250°C, and the polyamide having lower ηr which is the high melting polyamide having a melting point not less than 250°C and not more than 300°C.

That is, the most preferred aspect of the polyamide mixture that constitutes the thermoplastic resin composition according to the present invention is: the polyamide mixture comprises a low melting polyamide having a melting point not less than 200°C and less than 250°C and a relative viscosity not less than 3.5 and less than 6.0, and a high melting polyamide having a melting point not less than 250°C and not more than 300°C having a relative viscosity not less than 2.0 and less than 3.5; the polyamide mixture has a 5 to 15 mass % content of the high melting polyamide relative to 100

mass % of the total polyamide mixture; and the polyamide mixture has a relative viscosity in the range of 3.3 to 5.0.

The concentration of end groups of a polyamide exerts an influence upon a reaction between the polyamide and a functionalized polyphenylene ether. Polyamide resins generally have end groups of amino groups and carboxyl groups. In general, high concentration of carboxyl groups decreases impact resistance and increases flowability. On the other hand, high concentration of amino groups increases impact resistance and decreases flowability.

In the present invention, preferably used are polyamides having a concentration ratio of amino groups/carboxyl groups in the range of 1.0 to 0.1, more preferably 0.8 to 0.2, and still more preferably 0.6 to 0.3.

In order to reduce viscosity changes depending on processing conditions in the resin composition according to the present invention, it is desirable that the concentration ratio of amino groups/carboxyl groups of a polyamide is substantially not more than 1.0. In order to reduce decrease of impact resistance, it is desirable that the ratio of amino groups/ carboxyl groups is 0.1 or higher.

Furthermore, the end group concentration of the polyamide mixture according to the present invention desirably falls within the above-mentioned range as a mixture. Moreover, all the polyamides to be used preferably have the end group concentrations within the above-mentioned range.

In order to adjust the end groups of polyamide resins, methods well known to those skilled in the art may be used. For example, one of the methods is, for the purpose of realizing a given end group concentration at the time of polymerization of polyamide resins, to add one or more compounds selected from diamine compounds, monoamine compounds, dicarboxylic acid compounds, monocarboxylic acid compounds, and the like.

In addition, in the present invention, there may be used without any problems metallic stabilizers, which are well known, used for the purpose of enhancing thermostability of polyamide resins, and disclosed in Japanese Patent Laid-Open No. 01-163262.

Among such metallic stabilizers, particularly preferred stabilizers are CuI, $CuCl_2$, copper acetate, cerium stearate, and the like. Furthermore, alkali metal halides represented by potassium iodide, potassium bromide and the like are also preferably used. As a matter of course, there is no problem of combined addition of the metallic stabilizers and the halides of alkali metals.

Preferred amounts of adding the metallic stabilizers and/or the alkali metal halides are, as the total amount of metallic stabilizers and the alkali metal halides, 0.001 to 1 part by mass to 100 parts by mass of the polyamide resin.

The method for adding the metallic stabilizers and/or the alkali metal halides is not particularly restricted. For example, polymerization may be conducted in the presence of monomers and the metallic stabilizers and/or the alkali metal halides; or the metallic stabilizers and/or the alkali metal halides may be added at the time of extrusion as a solid or a liquid in which the metallic stabilizers and/or the alkali metal halides are dissolved in water and the like.

Furthermore, other than the additives mentioned above, there may be added well known additives and the like that can be added to polyamides in the amounts of 10 parts by mass or less to 100 parts by mass of polyamides.

The polyphenylene ether that is used in the present invention is a homopolymer and/or a copolymer comprising a structural unit represented by the formula (1).

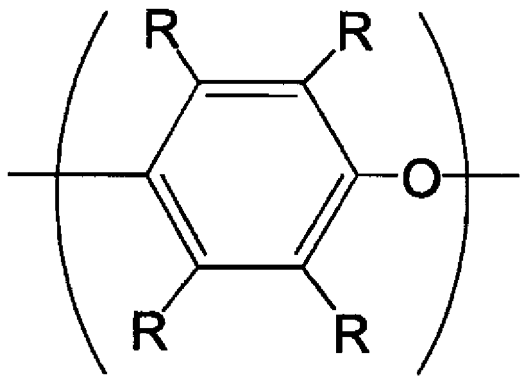

(In the formula, O represents an oxygen atom; and Rs independently represent hydrogen, halogen, primary lower alkyl, secondary lower alkyl, phenyl, haloalkyl, aminoalkyl, hydrocarbon oxy, or halo hydrocarbon oxy where at least two carbon atoms separate a halogen and an oxygen atom.)

Examples of the polyphenylene ether according to the present invention may include: poly(2,6-dimethyl-1,4-phenylene ether), poly(2-methyl-6-ethyl -1,4-phenylene ether), poly(2-methyl-6-phenyl-1,4-phenylene ether), poly(2,6-dichloro-1,4-phenylene ether), and the like; and furthermore, polyphenylene ether copolymers such as a copolymer of 2,6-dimethylphenol and other phenols, for example, a copolymer of 2,6-dimethylphenol and 2,3,6-trimethylphenol, or a copolymer of 2,6-dimethylphenol and 2-methyl-6-buthylphenol as disclosed in Japanese Patent Publication No. 52-17880.

Among these polyphenylene ethers, particularly preferred polyphenylene ethers are poly(2,6-dimethyl-1,4-phenylene ether), the copolymer of 2,6-dimethylphenol and 2,3,6-trimethylphenol, and a mixture of poly(2,6-dimethyl-1,4-phenylene ether) and the copolymer of 2,6-dimethylphenol and 2,3,6-trimethylphenol.

Methods for manufacturing the polyphenylene ether that is used in the present invention are not particularly restricted and well known methods may be used. Examples of the methods include those disclosed in U.S. Patent No. 3306874, U.S. Patent No. 3306875, U.S. Patent No. 3257357, U.S. Patent No. 3257358, Japanese Patent Laid-Open No. 50-51197, Japanese Patent Publication No. 52-17880, Japanese Patent Publication No. 63-152628, and the like.

The polyphenylene ether that is used in the present invention preferably has a reduced viscosity (ηsp/c: 0.5 g/dl, chloroform solution, measured at 30°C) in the range of 0.15 to 0.70 dl/g, more preferably 0.20 to 0.60 dl/g, and still more preferably 0.40 to 0.55 dl/g.

In the present invention, a polyphenylene ether that is partially or totally modified may also be used. The modified polyphenylene ether refers to a polyphenylene ether that is modified by at least one modifying compound that has at least one carbon-carbon double bond or triple bond, and at least one carboxylic group, acid anhydride group, amino group, hydroxyl group, or glycidyl group in molecular structure. All the modified polyphenylene ethers disclosed in International Patent Publication No. WO02/094936 may be used.

In this case, the mass ratio of the modified polyphenylene ether in the mixed polyphenylene ethers is not particularly restricted, but preferably 10 to 95 mass % (in the case of defining total polyphenylene ethers as 100%), more preferably 30 to 90 mass %, and most preferably 45 to 85 mass %.

Furthermore, in the present invention, less than 50 parts by mass of a styrene thermoplastic resin may be added to 100 parts by mass of the total of the polyamides and the polyphenylene ethers.

Examples of the styrene thermoplastic resin in the present invention may include: homopolystyrene, rubber modified polystyrene (HIPS), styrene - acrylonitrile copolymer (AS resin), styrene-gum polymer-acrylonitrile copolymer (ABS resin), and the like.

In addition, in the polyamide-polyphenylene ether resin composition according to the present invention, well known organic stabilizers may be used without any problems other than the metallic stabilizers that are detailed above as stabilizers for polyamides. Examples of the organic stabilizers may include: hindered phenol anti-oxidizing agents represented by Irganox 1098 and the like, phosphonite processing thermal stabilizers represented by Irgafos 168 and the like, lactone processing thermal stabilizers represented by HP-136, sulfur heat resistant stabilizers, hindered amine light stabilizers, and the like.

Among the organic stabilizers, it is more preferable to use the hindered phenol anti-oxidizing agents, the phosphonite processing thermal stabilizers, or combination of the hindered phenol anti-oxidizing agents and the phosphonite processing thermal stabilizers. Preferred blending amount of the organic stabilizers is 0.001 to 10 parts by mass to 100 parts by mass of the total of the polyamides and the polyphenylene ethers. More preferably the blending amount is 0.1 to 2 parts by mass. The elastomer that is used in the present invention is not particularly restricted. Preferred elastomers to be used in the present invention are block copolymers (hereafter, simply abbreviated as the block copolymers) comprising a polymer block that has at least one aromatic vinyl compound as a main unit and a polymer block that has at least one conjugated diene compound as a main unit.

As for the term "as a main unit" in the polymer block that has an aromatic vinyl compound as a main unit, the polymer block is defined to have at least a 50 mass % or more content of the aromatic vinyl compound, more preferably 70 mass % or more, still more preferably 80 mass % or more, and most preferably 90 mass % or more. The term "as a main unit" in the polymer block that has a conjugated diene compound as a main unit is the same as above, the polymer block is defined to have at least a 50 mass % or more content of the conjugated diene compound, more preferably 70 mass % or more, still more preferably 80 mass % or more, and most preferably 90 mass % or more. In the above cases, for example, even when a small amount of a conjugated diene compound or other compounds are randomly bonded to an aromatic vinyl compound block, the block has a 50 mass % or more content of an aromatic vinyl compound, the block is interpreted as a block copolymer that has the aromatic vinyl compound as a main unit. This is the same in the case of the conjugated diene compound.

Examples of the aromatic vinyl compound may include: styrene, α-methyl styrene, vinyltoluene, and the like. One or more compounds selected form these examples are used, but among the examples, styrene is particularly preferable.

Examples of the conjugated diene compound may include: butadiene, isoprene, piperylene, 1,3-pentadiene, and the like. One or more compounds selected form these examples are used, but among the examples, butadiene, isoprene, and combination of butadiene and isoprene are particularly preferable.

The block copolymer in the present invention preferably has a sequence type selected from a-b type, a-b-a type, and a-b-a-b type where (a) is the polymer block that has an aromatic vinyl compound as a main unit, and (b) is the

polymer block that has a conjugated diene compound as a main unit. As a matter of course a mixture of these block copolymers may also be used.

Among the sequence types, the a-b-a type and the a-b-a-b type are more preferable, and the a-b-a type is most preferable.

Examples of the preferred mixing composition of a mixture of block copolymers that have different sequence types may include: a mixture of a-b-a type block copolymer and a-b type block copolymer; a mixture of a-b-a type block copolymer and a-b-a-b type block copolymer; a mixture of a-b-a-b type block copolymer and a-b type block copolymer, ; and the like.

In addition, the block copolymers that are used in the present invention are preferably hydrogenated block copolymers. The hydrogenated block copolymers are the block copolymers of aromatic vinyl compounds and conjugated diene compounds that are subjected to hydrogenation treatments so that amounts of aliphatic double bonds (that is, hydrogenation rate) in the polymer block that has a conjugated diene compound as a main unit are controlled in the range of greater than 0 to 100%. Preferred hydrogenation rate of the hydrogenated block copolymers are 50% or higher, more preferably 80% or higher, and most preferably 98% or higher.

The block copolymers may be used without any problems as mixtures of unhydrogenated block copolymers and hydrogenated block copolymers.

Furthermore, in the present invention, there may be preferably used block copolymers disclosed in International Patent Publication No. WO02/094936 such as block copolymers that are totally or partially modified or block copolymers that contain oils in advance.

In the present invention, the mass proportions of the polyamide, the polyphenylene ether and the elastomer relative to 100 parts by mass of the total of the polyamide, the polyphenylene ether, and the elastomer are desirably 30 to 60 parts by mass of the polyamide, 30 to 60 parts by mass of the polyphenylene ether, and 5 to 30 parts by mass of the elastomer. More preferably, the proportions are 35 to 60 parts by mass of the polyamide, 35 to 60 parts by mass of the polyphenylene ether, and 5 to 20 parts by mass of the elastomer. Most preferably, the proportions are 40 to 60 parts by mass of the polyamide, 40 to 60 parts by mass of the polyphenylene ether, and 5 to 20 parts by mass of the elastomer.

In addition, in the present invention, it is required to add an inorganic filler having a mean particle diameter of 0.05 to 1 μm.

The main purpose of adding the particulate inorganic filler in the present invention is not to enhance mechanical characteristics, but to increase the melt viscosity of the resin composition.

Preferred inorganic filler is at least one selected from the group consisting of metallic oxides and sulfides of titanium, iron, copper, zinc, aluminum, and silicon. More specifically, preferred inorganic filler is at least one selected from the group consisting of titanium dioxide, silicon oxide, silica, alumina, zinc oxide, and zinc sulfide.

Among the inorganic fillers, titanium dioxide and zinc oxide are preferable, and most preferably titanium dioxide. The titanium dioxide may be treated titanium dioxide that is subjected to a surface treating with an alumina-silicon compound or polysiloxane. In this case, the content of titanium dioxide is in the range of 90 to 99 mass %, and more preferably 93 to 98 mass %. In this case, the content of titanium dioxide does not include the surface treating agents.

The mean particle diameter of the inorganic filler is required to be in the range of 0.05 to 1 μm, preferably 0.1 to 0.7 μm, more preferably 0.1 to 0.5 μm, and most preferably 0.2 to 0.4 μm. When the mean particle diameter exceeds 1 μm, effects of increasing the melt viscosity of the resin composition are reduced, and increased is the possibility of inviting deterioration of the appearance of sheets.

The term of the mean particle diameter in the present invention is a measured value obtained by the centrifugal sedimentation method, and denotes a weight median diameter. Solvents used for dispersing the inorganic filler in the measurement should be properly selected depending on the type of the inorganic filler. For example, sodium hexametaphosphate solution is used as the solvent when the inorganic filler is titanium dioxide.

In the present invention, the amount of the inorganic filler to be added is preferably sufficient to increase the melt viscosity of the resin composition. The melt viscosity is a property that is required when sheets and the like are subjected to vacuum forming. Unlike compositions to be subjected to injection molding and the like, compositions having relatively high melt viscosity tend to have an excellent vacuum formability. That is, compositions to be subjected to vacuum forming preferably have high melt viscosity.

The melt viscosity of the resin composition denotes melt viscosity [η] that is measured, for example with a capillary flow tester, at a temperature of the melting point of the resin composition or higher, and with a shear rate of 30 (s-1). Increase of the melt viscosity denotes, in the case of defining the [η] of a resin composition that does not contain an inorganic filler as 100%, increase of the [η] by 10% or more after the inorganic filler is added to the resin composition.

As mentioned above, the amount of the inorganic filler to be added is not particularly restricted as long as the amount is sufficient to increase the melt viscosity of the resin composition. Specifically, the amount of the inorganic filler to be added is desirably in the range of from about 1 to about 20 parts by mass relative to 100 parts by mass of the total of the polyamide, the polyphenylene ether, and the elastomer. More preferably, the range is from 1.5 to 15 parts by mass, still more preferably from 2 to 10 parts by mass, and most preferably from 3 to 6 parts by mass. In order to exhibit

effects of increasing the melt viscosity, at least about one part by mass or more is desirably added. In order to retain an excellent impact property, about 20 parts by mass or less is desirably added.

In addition, in the present invention, compatibilizers may be used. The compatibilizers that are used in the present invention are not restricted as long as the compatibilizers improve the physical properties of the polyamide-polyphenylene ether mixture. The compatibilizers that are used in the present invention denote multi-functional compounds that interact with the polyphenylene ether, the polyamide, or both of the polyphenylene ether and the polyamide. The interaction may be chemical reactions such as a graft reaction, or physical reactions such as change of the surface properties of dispersion phase.

In either case, thus-obtained polyamide-polyphenylene ether mixture has improved compatibility.

Examples of the compatibilizers that are used in the present invention are disclosed in detail in Japanese Patent Laid-Open No. 08-8869, Japanese Patent Laid-Open No. 09-124926, and the like. All of these well known compatibilizers may be used in the present invention, and combined use of the compatibilizers is also possible.

Among the various compatibilizers, examples of particularly preferred compatibilizers may include: maleic acid and derivatives thereof, citric acid and derivatives thereof, fumaric acid and derivatives thereof, and polyphenylene ether pellets that are modified in advance by maleic acid or derivatives thereof, citric acid or derivatives thereof, or fumaric acid or derivatives thereof.

The preferred amount of the compatibilizers that are used in the present invention is 0.01 to 25 parts by mass relative to 100 parts by mass of the total of the mixture of the polyamide and the polyphenylene ether. More preferably, the amount is 0.05 to 10 parts by mass, and most preferably 0.1 to 5 parts by mass.

In the present invention, the resin composition may further comprise a conductive carbon filler.

Examples of the conductive carbon filler that is used in the present invention may include: conductive carbon black, carbon nanotube, carbon fiber, and the like. Examples of the conductive carbon black may include Ketjenblack (EC, EC-600JD) available from Ketjen Black International Company Ltd., and the like. Examples of the carbon nanotube may include carbon fibril (BN fibril) available from Hyperion Catalysis International, Inc., and the like. Among the carbon fibrils, particularly preferred are carbon fibrils disclosed in International Patent Publication No. WO94/23433.

Methods of adding the conductive carbon fillers are not particularly restricted, but a preferred method is to add the conductive carbon filler as a masterbatch that contains the conductive carbon filler in a polyamide in advance. In this case, when the polyamide masterbatch is defined as 100 mass %, a desirable amount of the conductive carbon filler which is the conductive carbon black is 5 to 15 mass %, and a desirable amount of the conductive carbon filler which is other than the conductive carbon black is 10 to 30 mass %. More preferably, the amount of the conductive carbon filler which is the conductive carbon black is 7 to 12 mass %, and the amount of the conductive carbon filler which is other than the conductive carbon black is 15 to 25 mass %.

Examples of the masterbatch that contains a conductive carbon filler in a polyamide in advance may include: a masterbatch in which conductive carbon black is dispersed homogeneously in a polyamide in advance as disclosed in Japanese Patent Laid-Open No. 02-201811; a masterbatch in which conductive carbon black is dispersed heterogeneously to some moderate degree in a polyamide as disclosed in International Patent Application No. JP03/9104 filed by the present applicant; a carbon fibril masterbatch such as polyamide 66/carbon fibril masterbatch (product name: Polyamide66 with Fibril™ Nanotubes RMB4620-00: carbon fibril content of 20%) available from Hyperion Catalysis International, Inc.; and the like.

Among the above masterbatches, most preferred is the masterbatch in which conductive carbon black is dispersed heterogeneously to some moderate degree in a polyamide.

Specifically, preferred is a masterbatch that has at least a part of the conductive carbon black as 1 to 100 agglomerates having a major axis 20 to 100 $\mu$m long in a continuous 3 $mm^2$ area when the area is observed with an optical microscope. More preferred is a masterbatch that has the conductive carbon black as 2 to 30 agglomerates having a major axis 20 to 100 $\mu$m long in a continuous 3 $mm^2$ area when the area is observed with an optical microscope.

Observation of the conductive carbon black agglomerates in a masterbatch is conducted as follows: First, the masterbatch pellet is cut with a glass-knife-mounted microtome so that the cut surface has a mirror surface. Next, the cut surface is observed with an optical microscope (PME3: manufactured by Olympus Corporation) under a magnification of 50 times with reflected light, and photographs of the cut surface are taken. This makes it possible to visually count the conductive carbon black agglomerates having a major axis not less than 20 and not more than 100 $\mu$m in a 3 $mm^2$ area. As for the observation direction, when the master pellet is a strand cut pellet, the pellet usually has a cylindrical shape. Then the pellet is cut to have a cross section almost perpendicular to the long side of the pellet, and the cross section is observed. At least 3 cross sections are cut from separate pellets, and observed. Then an average value of thus-obtained values is defined as agglomerate counts.

Preferred methods for manufacturing the polyamide masterbatch of the conductive carbon filler are: by using a twin-screw extruder having one feed opening on the upstream side and one or more feed opening on the downstream side, a method of feeding the polyamides from the feed opening on the upstream side, adding the conductive carbon filler from the feed opening on the downstream side, and melt-kneading the polyamides and the conductive carbon filler;

a method of feeding a part of the polyamides and the conductive carbon filler from the feed opening on the upstream side, adding the remainder of the polyamides from the feed opening on the downstream side, and melt-kneading the polyamides and the conductive carbon filler; a method of feeding a part of the polyamides from the feed opening on the upstream side, adding the conductive carbon filler and the remainder of the polyamides from the feed opening on the downstream side, and melt-kneading the polyamides and the conductive carbon filler. Among these methods, most preferred is the method of feeding a part of the polyamides from the feed opening on the upstream side, adding the conductive carbon filler and the remainder of the polyamides from the feed opening on the downstream side, and melt-kneading the polyamides and the conductive carbon filler.

In addition, when the polyamide masterbatch of the conductive carbon filler is manufactured, feeding a polyester adhesive (for example, PolyOxyter (registered trademark) available from PolyChem Alloy - Europe, Ltd. (Great Britain)) together with the polyamides or the conductive carbon filler makes it possible to obtain strands having an excellent appearance.

A preferred amount of carbon in the present invention is 0.5 to 4 parts by mass, and more preferably 1 to 3 parts by mass to 100 parts by mass of the total of the polyamide, the polyphenylene ether, and the elastomer.

Furthermore, in the present invention, additional components may be added other than the components mentioned above in case of necessity as long as the addition does not impair the effects of the components of the present invention. The amount of the additional components to be added preferably does not exceed 15 parts by mass to 100 parts by mass of the total of the polyamide, the polyphenylene ether, the elastomer, and the inorganic filler.

Examples of the additional components may include: other thermoplastic resins such as polyesters and polyolefins; other inorganic fillers such as talc, kaolin, xonotlite, wollastonite, potassium titanate, and glass fiber; well known silane coupling agents for enhancing compatibility between the inorganic filler and the resin; fire retardant additives such as halogenated resins, silicone fire retardant additives, magnesium hydroxide, aluminum hydroxide, organophosphate compounds, ammonium polyphosphate, and red phosphorus; fluoropolymers that exhibit effects of preventing dripping; plasticizing agents such as oils, low molecular weight polyolefins, polyethylene glycol, and fatty esters; coloring agents such as carbon black for coloring fire retardant auxiliaries such as antimony trioxide; antistatic additives; various peroxides; anti-oxidizing agents; ultraviolet absorbing agents; light stabilizers; and the like.

The thermoplastic resin composition according to the present invention preferably has large melt viscosity differentials depending on temperature.

Specifically, a proportion of a melt viscosity at 240°C to a melt viscosity at 280°C is preferably 10.0 or higher, and more preferably not less than 20.0 and less than 50.0. Making the melt viscosity proportion to be 10.0 or higher makes it possible to more highly realize both extrudability at the time of sheet processing and the vacuum formability.

More specifically, a melt viscosity at 280°C is desirably not less than $1 \times 10^3$ Pa·s and not more than $1 \times 10^4$ Pa·s. A melt viscosity at 240°C is desirably not less than $1 \times 10^4$ Pa·s and less than $1 \times 10^7$ Pa·s, and more preferably not less than $1 \times 10^5$ Pa·s and not more than $1 \times 10^6$ Pa·s.

In the present invention, the methods to measure the melt viscosity at 280°C and the melt viscosity at 240°C are different.

The melt viscosity at 280°C in the present invention is a value of complex viscosity [η*] that is measured with a rotational viscometer type rheometer [RDA-II: manufactured by Rheometrics (U.S.)] under an environmental temperature of 280°C, with a frequency of 1 radian/second, and in a linear region.

The melt viscosity at 240°C in the present invention is a value of melt viscosity that is measured with a capillary flow tester [Capirograph 1C: manufactured by Toyo Seiki Seisaku-sho, Ltd. (JP)] under conditions in conformity with ISO 1133, and at an apparent shear rate of 15 $s^{-1}$ which is measured at a cylinder temperature of 240°C. When the melt viscosity at 240°C is measured, the cylinder temperature should be set to be 238 to 242°C.

In addition, the time of preheating (the time from filling the resin in the cylinder to the beginning of the measurement) in the measurement is properly selected from 4 to 8 minutes. Furthermore, the sample to be measured should be a sample in which the moisture content is controlled to be about 200 to about 1000 ppm, and more preferably about 300 to 700 ppm. In particular, when a sample having a moisture content of exceeding 1000 ppm is used, its melt viscosity can be measured lower than its actual value.

Next, manufacturing methods for obtaining the resin composition according to the present invention are explained in detail.

Examples of processing machinery for obtaining the resin composition according to the present invention may include: a monoaxial extruder, a twin-screw extruder, a roll, a kneader, a Brabender Plastograph, a Bambury mixer, and the like. Among the machinery, the twin-screw extruder is particularly preferable, and most preferable is a twin-screw extruder having a feed opening on the upstream side and one or more feed opening on the downstream side.

In obtaining the resin composition according to the present invention, in order to reduce decrease of the impact resistance of the resin composition and increase of the resin temperature at the time of extrusion, conducting a manufacturing method comprising the following steps is desirable.

the first step: a step for manufacturing a first premixture by melt-kneading at least the polyphenylene ether and the

elastomer;
the second step: a step for manufacturing a second premixture by melt-kneading at least the first premixture and the polyamide having lower relative viscosity, in case of necessity, and the inorganic filler; and
the third step: a step of melt-kneading at least the second premixture and the polyamide having higher relative viscosity, in case of necessity, and the inorganic filler.

More preferably, the first step, the second step, and the third step are conducted continuously with a single twin-screw extruder.

In addition, the inorganic filler is desirably added in the third step in view of reducing the resin temperature.

The screw diameter of the extruder that is used in the method is not particularly restricted. But, the screw diameter is preferably not less than about 20 mm and not more than about 200 mm, more preferably not less than about 40 mm and not more than about 125 mm, and most preferably not less than about 50 mm and less than about 100 mm.

In addition, L/D of the extruder is preferably not less than about 20 and less than about 60, more preferably not less than about 30 and less than about 60, and most preferably not less than about 40 and less than about 60. The L/D denotes a value [L] of the length of a screw of the extruder is divided by [D] of the diameter of the screw.

The feed opening on the downstream side of the extruder is preferably provided at the following position. That is, when the cylinder length of the extruder is defined as 100, a first feed opening on the downstream side is provided in the range of about 30 to about 60 from the starting point of the feed opening on the upstream side of the extruder. Then a second feed opening on the downstream side is provided on the further downstream side than the first feed opening on the downstream side, and in the range of about 50 to about 80 when the cylinder length of the extruder is defined as 100.

The melt-kneading temperature is not particularly restricted, but in general, a condition for obtaining a proper composition is arbitrarily selected from about 260 to about 340°C. Preferably, the temperature is in the range of about 270 to about 330°C. In particular, it is desirable to set the temperature of from the feed opening on the upstream side to the first feed opening on the downstream side to be in the range from about 300 to about 330°C, and set the temperature of from the first feed opening on the downstream side to before a die to be in the range from about 270 to about 300°C. The temperature of the die is desirably in the range of from 300°C to 330°C, and the temperature difference between the die and the resin is desirably 15°C or less.
However, these preset temperatures are required to change depending on the screw designs. In a screw design that provides weak kneading, the temperatures can be set slightly higher than the above-mentioned preset temperatures. On the other hand, in a screw design that provides strong kneading, the temperatures can be set slightly lower than the above-mentioned preset temperatures. In the present invention, the cylinder preset temperatures are reference values, and it is desirable to control the temperature not by the cylinder preset temperatures but by the resin temperature.

The resin temperature at the time of extrusion the composition is influenced by factors such as the cylinder preset temperatures, screw revolution, feed rate of the resin, and the screw design. In the present invention, the preferred resin temperature is in the range of from 300 to 340°C, and more preferably from 320 to 335°C. In order to reduce generation of a die drool at the time of extrusion, it is desirable to control the resin temperature at the time of melt-kneading the composition not to exceed 340°C. The term "the resin temperature" denotes a temperature obtained by actually measuring a molten resin that is being extruded from a die nozzle at the time of extrusion with a thermometer such as a contact type thermocouple.

Although, in the resin composition according to the present invention, use of two or more polyamides that have different ηrs and adoption of the combination in which the content of the higher ηr polyamide is larger than that of the lower ηr polyamide makes it possible to reduce the resin temperature, these effects become more remarkably by employing the above mentioned manufacturing method.

In the case of manufacturing the polyphenylene ether-polyamide resin composition having excellent vacuum formability according to the present invention with a twin-screw extruder, proper screw designs of the extruder are explained hereafter.

When the manufacturing method comprises a first step for manufacturing a first premixture by melt-kneading at least the polyphenylene ether and the elastomer; and a second step of melt-kneading at least the first premixture and the polyamide, it is very important that an extruder used in the second step has a screw configuration containing at least one kneading block, the kneading block is comprised of a plural of screw elements, and the kneading block has an L/D in the range of 1.0 to 3.0 where L is the length of a screw constituting the kneading block in the direction of a screw axis, and D is the diameter of the screw constituting the kneading block.
When the length of the kneading block is less than 1.0, there tend to occur problems such as surging at the time of extrusion. On the other hand, when the L/D exceeds 3.0, for example in the case of processing a resin having high viscosity, the resin temperature at the time of processing becomes too high such as a temperature exceeding 350°C, and decomposition of the resin and the like occur, which can cause discoloring of strands.

"The kneading block" mentioned above denotes a block having a plural of screw elements contiguously. The screw elements are called kneading discs, and exhibit high kneading effects. In this case, kneading disc parts that

constitute the kneading block are not particularly restricted, however, the kneading disc parts may be properly selected from clockwise kneading discs (forward-feed type: R type kneading disc: R-KD), anticlockwise kneading discs (backward-feed type: L type kneading disc: L-KD), neutral kneading discs (non-conveying type: N type kneading disc: N-KD), and the like. As a matter of course, the kneading disc parts are not restricted thereto. When the kneading disc parts are selected, there may be selected kneading disc parts that have screw elements each having 1 to 10, more preferably 3 to 7 kneading wings per part.

Examples of placing the kneading disc parts in a kneading block may include: combination (RR combination) of plural R-KDs in a row, combination (NN combination) of plural N-KDs in a row, combination (RN combination) of one or plural R-KDs and one or plural of N-KDs in a row, combination (RL combination) of one or plural R-KDs and L-KD in a row, combination (NL combination) of one or plural N-KDs and L-KD in a row, combination (RNL combination) of one or plural R-KDs and one or plural of N-KDs and L-KD in a row, and the like.

Among the above kneading disc parts, it is particularly preferable that the plural of screw elements constituting the kneading block have at least one screw element having a sealing capability. In the present invention, examples of parts that may be preferably used as a screw element having a sealing capability are L-KD and N-KD, and L-KD is particularly useful. In addition, when L-KD is used, L/D of the single part is desirably 0.8 or less.

Specifically, preferred combinations are a combination (RL combination) of one or plural R-KDs and L-KD in a row, and a combination (NL combination) of one or plural N-KDs and L-KD in a row. Most preferred is a combination of two R-KDs and one L-KD in a row.

Furthermore, the L/D mentioned in claims of the present invention denotes a value obtained by dividing the length (L) of a screw constituting the kneading block in the direction of a screw axis by the diameter (D) of the screw constituting the kneading block. For example, in the case of a screw having a screw diameter of 40 mm, a kneading block has an L/D of 1.8 that consists of three kneading disc parts of R-KD having a length of 36 mm in the direction of a screw axis, R-KD having a length of 18 mm in the direction of a screw axis, and L-KD having a length of 18 mm in the direction of a screw axis.

In the step of melt-kneading a polyphenylene ether and a polyamide according to the present invention, it is definitely also possible to have plural kneading blocks, and which can provide more preferable results.

Specifically, the step has plural kneading blocks having an L/D in the range of 1.0 to 3.0, and the kneading blocks are separated each other by a carrier block having an L/D of 2.0 or higher. More preferably, the kneading blocks are separated each other by a carrier block having an L/D of 4.0 or higher.

The carrier block mentioned above denotes a block that is basically consisted of forward-feed type screw elements and does not have a kneading block having an L/D of 1.0 or higher.

Furthermore, in this case, the total of L/Ds of plural kneading blocks in the step of melt-kneading a polyphenylene ether and a polyamide is desirably in the range of 3.0 to 6.0, more desirably in the range of 3.0 to 5.0.

In addition, in order to manufacture polyamide/polyphenylene ether, it is more preferable that the manufacturing method according to the present invention comprises in the order of a first step of feeding and melting a polyphenylene ether; and a second step of melt-kneading the molten polyphenylene ether and a polyamide.

In this case, a screw configuration in the step of melting a polyphenylene ether desirably has a specific kneading block as with in the step of melt-kneading the polyphenylene ether and a polyamide. Specifically, a screw configuration in the step of melting a polyphenylene ether preferably has at least one kneading block, the kneading block is comprised of a plural of screw elements, and the kneading block has a length (L/D) in the range of 1.0 to 8.0. More preferably, the length is in the range of 1.5 to 6.0, and most preferably in the range of 2.0 to 4.0. In order to melt a polyphenylene ether sufficiently, the kneading block desirably has an L/D of 1.0 or greater. In order to decrease the molten resin temperature of the composition to be low, the kneading block desirably has an L/D of 8.0 or less.

In the manufacturing method according to the present invention, preferred conditions in regard to a discharge rate, screw revolution, and the like are as follows: it is desirable to conduct the manufacturing under the condition that operating condition parameter P represented by the following formula is in the range of 0.20 to 0.40 [kg·cm$^3$], and more preferably in the range of $5 \times 10^{-5}$ to $5 \times 10^{-4}$ [kg·cm$^3$];

$$P = (Q/D^3)/N$$

(in which Q [kg/minute] is a discharge rate of the extruder per minute; D [cm] is a screw diameter of the extruder; N [minute$^{-1}$] is a screw revolution of the extruder; and P [kg·cm$^3$] is the extruding condition parameter.)

In addition, in the manufacturing method according to the present invention, in order to make a discharge rate per unit opening area of a die opening and unit time represented by the following formula to be 100 kg/cm$^2$ to 300 kg/cm$^2$, it is necessary to select an appropriate die consistent with a discharge rate of an extruder and discharge rate of the extruder.

$$O\ (hole) = O\ (total)/(N(die) \times r^2 \times \pi)$$

(in which O (hole) represents discharge rate [kg/hr·cm$^2$] per unit opening area of a die opening and unit time; O (total) represents the total of discharge rate [kg/hr] of the extruder; N(die) represents the number of the die opening of the extruder; r [cm] represents the radius of the die opening; and $\pi$ represents the circle ratio.)

The manufacturing method gains more stability by controlling the method so that appropriate die pressure is generated at a die portion of an extruder. In order to reduce surging at the time of extrusion, discharge rate per unit opening area of a die opening is desirably 100 kg/hr·cm$^2$ or higher. In order to reduce heat generation, discharge rate per unit opening area of a die opening is desirably not more than 300 kg/hr·cm$^2$. More preferred discharge rate per unit opening area of a die opening is 120 kg/hr·cm$^2$ to 280 kg/hr·cm$^2$. Most preferred discharge rate per unit opening area of a die opening is 150 kg/hr·cm$^2$ to 250 kg/hr·cm$^2$.

The resin composition that may be obtained by the manufacturing method according to the present invention can be used for fabrication processes such as injection molding, extrusion, blow molding, and inflation molding. Among the processings, the resin composition is particularly suitable for injection molding and extrusion, and most suitable for extrusion.

Furthermore, among extrusion, the resin composition is particularly suitable for sheet extrusion and film extrusion. Extruders and the like used for the sheet extrusion and the film extrusion are not particularly restricted, a monoaxial extruder or a twin-screw extruder may be used. In addition, the resin composition is suitable for about 2 to 7 layers multilayer laminated film extrusion using plural extruders.

The Cylinder preset temperature in extrusions does not particularly cause problems as long as the temperature is the melting temperature of a resin or higher. Specifically, the cylinder preset temperature is in the range of 250°C to 320°C. More preferably, the temperature is in the range of 250°C to 320°C, and the temperature is high enough to make a polyamide to have melt viscosity suitable for the sheet extrusion and the like. In order to prevent productivity from decreasing, extrusion is desirably conducted at a preset temperature of 250°C or higher. In order to prevent the appearances of films or sheets from deteriorating, extrusion is desirably conducted at a preset temperature of 320°C or less.

In addition, a molten resin temperature at the time of sheet extrusion is preferably not less than 270 and not more than 320°C. More preferably, the temperature is not less than 280 and not more than 310°C, and most preferably not less than 280 and not more than 300°C. The molten resin temperature at this time denotes a temperature obtained by actually measuring a molten resin that is being extruded from a T-die at the time of extrusion with a thermometer such as a contact type thermocouple.

In the case of manufacturing a sheet or a film by using the thermoplastic resin composition according to the present invention, the thickness of the sheet or the film is preferably from 50 μm to 3 mm. The thickness is more preferably from 100 μm to 1 mm, still more preferably from 100 μm to 700 μm, and most preferably from 200 μm to 500 μm.

In addition, the width of the sheet or the film is not particularly restricted. The resin composition according to the present invention is particularly suitable for applications to a broad sheet having a width of greater than 60 cm. In particular, the resin composition is more suitable for a very large sheet having a width greater than 80 cm and not greater than 200 cm.

Furthermore, films or sheets manufactured with the thermoplastic resin composition according to the present invention can be processed into various shapes by vacuum forming, pressure molding, press molding, and the like. The temperature setting at this time is not particularly restricted, but the resin temperature at the time of processing is desirably not less than 200°C and less than 280°C. More preferably, the resin temperature is in the range of from 220°C to 250°C.

Hereinafter, the present invention will be explained in detail with referring to Examples and Comparative Examples.

## Examples

The present invention will be explained based on Examples.

### Example 1 (Present Invention), and Examples 2, 3, and 4 (Comparative Examples)

There was used an extruder ZSK40SC (manufactured by Coperion Werner & Pfleiderer GmbH & Co. KG, Germany) that has one feed opening on the upstream side and two feed openings on the downstream side, and a ratio (L/D) of 48 where L/D is a ratio of the total length of the screw to the diameter of the screw of the extruder. The number of barrels is 12 (L/D per a barrel is 4), and there were placed the feed opening on the upstream side at the 1st barrel; the first feed opening on the downstream side at the 6th barrel; the second feed opening on the downstream side at the 8th barrel; and vent ports for removing volatile constituent by reduced pressure suction at the 5th barrel and 10th barrel

respectively. The maximum cylinder temperature was set at 320°C.

The first feed opening on the downstream side was blocked, and the second feed opening on the downstream side was used as the feed opening on the downstream side. From the feed opening on the upstream side and the feed opening on the downstream side were fed the following materials in the proportions shown in Table 1.

Feed Opening on the Upstream Side:

a polyphenylene ether [S201A: manufactured by Asahi Kasei Chemicals] (hereafter, abbreviated simply as PPE); an elastomer [Kraton G1651: manufactured by Kraton Polymers LLC] (hereafter, abbreviated simply as SEBS); and a compatibilizer [maleic anhydride: manufactured by Mitsubishi Chemical Corporation] (hereafter, abbreviated simply as MAH).

Feed Opening on the Downstream Side:

a polyamide 6 [PA6 having ηr = 2.71, (concentration of end amino groups [NH2])/(concentration of end carboxyl groups [COOH] = 0.61)] (hereafter, abbreviated simply as PA6a); a polyamide 6 [PA6 having ηr = 4.9, (concentration of end amino groups [NH2])/(concentration of end carboxyl groups [COOH] = 0.93)] (hereafter, abbreviated simply as PA6b); a polyamide 6 [PA6 having ηr = 4.30, (concentration of end amino groups [NH2])/(concentration of end carboxyl groups [COOH] = 1.09)] (hereafter, abbreviated simply as PA6c); titanium dioxide as an inorganic filler [rutile type titanium dioxide having a weight median diameter of 240 nm, which is obtained by dispersing titanium dioxide at a concentration of 0.02 g/cm$^3$ in a 0.05 mass % aqueous solution of sodium hexaxa metaphosphate and measuring the solution by the centrifugal sedimentation method] (hereafter, abbreviated simply as filler 1); and a talc as an inorganic filler [talc having a weight median diameter of 3.2 μm, which is obtained by dispersing talc at a concentration of 0.02 g/cm$^3$ in a 0.05 mass % aqueous solution of sodium hexaxa metaphosphate and measuring the solution by the centrifugal sedimentation method] (hereafter, abbreviated simply as filler 2).

Then melt-kneading was conducted, strands were water-cooled, and pelletized. A screw revolution was 300 rpm and a rein feed rate was 45 kg/h at the time of the melt-kneading. Reduced pressure suction was conducted at the 5th barrel and 10th barrel for the purpose of removing volatile constituent.

At this time, the temperature of a molten resin that is being extruded from a die was measured with a contact type thermocouple, and the torque of a motor at the time of extrusion was recorded. Each motor torque was shown as a relative value to 100% of the motor rated capacity. The lower the motor torque is when compared at the same discharge rate, the more the output per time becomes. The resin temperatures and motor torques obtained at this time are shown in Table 1 as "Resin temperature on extrusion" and "Torque on extrusion", respectively.

The obtained pellets were molded into a universal test piece described in IS0294-1 and a flat plate molded piece with 150 mm by 150 mm by 2 mm with an injection molding machine (IS80EPN manufactured by TOSHIBA MACHINE CO., LTD.) at a molten resin temperature of 290°C and at a mold temperature of 90°C. The pieces were left in an aluminum moistureproof bag at 23°C for 48 hours.

After that, by using a test piece that was obtained by cutting the both ends of the universal test piece, Izod impact strength of the piece in the edgewise direction was measured in accordance with ISO179-1993.

In addition, by using a part of the universal test piece, complex viscosity [η*] was measured with a rheometer with a frequency of 1 radian/second, at 280°C, and in a linear region. At this time, the geometry that was used was a parallel plate having a diameter of 25 mm. In Table 1, the value of complex viscosity was described as "Melt viscosity".

Then the obtained pellets were subjected to the sheet extrusion with a monoaxial sheet extruder by which sheets about 15 cm wide can be molded, with setting he cylinder temperature and the die temperature to be 280°C, adjusting the die thickness to be 0.6 mm, and adjusting a screw revolution so that a discharge rate becomes 35 kg/h. At this time, there was examined the condition of die drool generation around the die.

Incidentally, the condition of die drool generation was evaluated based on the following criteria for evaluation.

AAA: no die drool generation is recognized even after a lapse of 30 minutes from the beginning of sheet extrusion.
AA: die drool generation is recognized after a lapse of 20 to 30 minutes from the beginning of sheet extrusion.
A: die drool generation is recognized after a lapse of 10 to 20 minutes from the beginning of sheet extrusion.
B: die drool generation is recognized immediately after the beginning of sheet extrusion.

The temperature of a molten resin at a T-die portion at the time of the sheet extrusion was actually measured with a contact type thermocouple. The molten resin temperature in Example 1 was 298°C, and in Example 3 was 333°C. The molten resin temperatures showed the tendency as with in the step of manufacturing resin pellets.

After that, the die portion was scraped, and the die drool was removed. Then the revolution of a draw roll was adjusted to obtain a sheet having a thickness of about 0.4 mm and a length of about 300 mm. The width of the sheet

was about from 140 to 145 mm.

As an evaluation of vacuum formability, the obtained sheet was cut to have a length of 200 mm, and the sheet was actually subjected to molding with a vacuum forming machine. The die of vacuum forming machine can mold simultaneously a square cup-shaped molded piece having a width of 70 mm, a length of 80 mm, and a depth of 30 mm, and a square cup-shaped molded piece having a width of 70 mm, a length of 80 mm, and a depth of 35 mm. The heat projected area of the sheet is 240 $cm^2$ (200 mm × 120 mm).

The heater of vacuum forming machine was set to be 310°C, and the time of preheating was set to be 5 minutes. After the 5 minutes heating, reduced pressure suction was conducted and vacuum forming was conducted. The temperature of the resin immediately after the completion of the preheating was measured with a noncontact type infrared thermometer, and the temperature was about 240°C.

For easy interpretation, Figure 1 shows a schematic view of the cup-shaped vacuum molded piece.

After vacuum formings were conducted under the same conditions, the molded conditions of thus-obtained cup-shaped molded pieces were visually inspected to evaluate the conditions in terms of the following three points.

Presence of any one of the following phenomena is judged as defective molding. Examples in which any one of the following phenomena occurred were evaluated as being poor vacuum formability, and so described in Table 1.

1) hole or crack: a shaped article has a hole or a crack.
2) wrinkle: a shaped article has a wrinkle.
3) the presence or absence of a mark of a vacuum hole: a shaped article has a mark of a hole for vacuum suction.

After that, in order to evaluate the drawdown property at the time of vacuum forming, at the time of completing the 5 minutes heating in vacuum forming described above, pictures of the condition observed from the side was taken with a digital camera. Based on the taken pictures, the amount of drawdown was calculated later and evaluated.

For easy interpretation, Figure 2 shows a schematic view of the drawdown.

[Table 1]

| | | Example 1 Present Invention | Example 2 Comparative Example | Example 3 Comparative Example | Example 4 Comparative Example |
|---|---|---|---|---|---|
| Fed from feed opening on the upstream side (1st barrel | | | | | |
| PPE | | 45 | 45 | 45 | 45 |
| SEBS | | 5 | 5 | 5 | 5 |
| MAH | | 0.3 | 0.3 | 0.3 | 0.3 |
| Fed from feed opening on the downstream side (8th) | | | | | |
| PA6a | | 14 | 14 | | 14 |
| PA6b | | 36 | 36 | | 36 |
| PA6c | | | | 50 | |
| Filler 1 | | 4 | | 4 | |
| Filler 2 | | | | | 4 |
| Average ηr of polyamide | | 4.27 | 4.27 | 4.3 | 4.27 |
| Resin temperature on extrusion | °C | 340 | 338 | 369 | 338 |
| Torque on extrusion | % | 75~80 | 74~79 | 74~78 | 75~79 |
| Izod impact strength | $kJ/m^2$ | 85 | 92 | 35 | 78 |
| Melt viscosity (280°C) | Pa·s | 3300 | 1040 | 2020 | 2510 |

(continued)

| | | | | | |
|---|---|---|---|---|---|
| Fed from feed opening on the downstream side (8th) | | | | | |
| Condition of die drool generation | - | A | A | B | B |
| Drawdown property | | 9.2 | 17 | 11 | 15 |
| Vacuum formability | | Good | Poor | Poor | Poor |
| Presence or absence of hole or crack | | None | None(*a) | None(*a) | None(*a) |
| Presence or absence of wrinkle Presence or absence of wrinkle | | None | Lots of large wrinkles | Lots of large wrinkles | Lots of large wrinkles |
| Presence or absence of mark of vacuum hole | | None | Recognized faintly | None | None |
| *a: There was no hole, but a corner had a thin thickness portion. | | | | | |

Example 1 (Example) which is a resin composition according to the present invention and Example 3 (Comparative Example) have almost the same ηrs of the polyamides, but Example 1 and Example 3 are obviously different in the condition of die drool generation and in the impact strength. In addition, Example 1 and Example 3 are different in resin temperature at the time of extrusion by as much as about 30°C, and which has established that the composition according to the present invention is excellent in productivity and physical properties.
By the way, when Example 1 is contrasted with Example 2 (Comparative Example), although Example 1 and Example 2 are different only in the presence or absence of the inorganic filler, it has been established that the absence of the inorganic filler causes considerable decrease of melt viscosity and drawdown property.
In Example 4 (Comparative Example), the inorganic filler was changed.

Examples 5 to 7 (Present Invention), Examples 9 to 12 (Present Invention), and Example 8 (Comparative Example)

The extruder used in Example 1 was set as with Example 1 except that the second feed opening on the downstream side was blocked, and the first feed opening on the downstream side was used as the feed opening on the downstream side. From the feed opening on the upstream side and the feed opening on the downstream side were fed the following materials in the proportions shown in Table 2. Feed Opening on the Upstream Side: PPE, SEBS, and MAH Feed Opening on the Downstream Side:

a polyamide 66 [PA66 having ηr = 2.79, (concentration of end amino groups [NH2])/(concentration of end carboxyl groups [COOH]])]= 0.69), melting point = 263°C] (hereafter, abbreviated simply as PA66a); a polyamide 66 [PA66 having ηr = 5.13, (concentration of end amino groups [NH2])/(concentration of end carboxyl groups [COOH]])] = 0.41), melting point = 262°C] (hereafter, abbreviated simply as PA66b); a polyamide 12 [PA12 having ηr = 2.82, (concentration of end amino groups [NH2])/(concentration of end carboxyl groups [COOH]])] = 0.44), melting point = 178°C] (hereafter, abbreviated simply as PA12); PA6a; PA6b; and filler 1

Then melt-kneading was conducted, strands were water-cooled, and pelletized. A screw revolution was 300 rpm and a rein feed rate was 45 kg/h at the time of the melt-kneading. Reduced pressure suction was conducted at the 5th barrel and 10th barrel for the purpose of removing volatile constituent.
As with Example 1, the obtained pellets were subjected to injection molding to provide a universal test piece described in ISO294-1 and a flat plate molded piece with 150 mm by 150 mm by 2 mm. Izod impact strength in the edgewise direction was measured. As with Example 1, melt viscosity was measured with a rheometer at 280°C. The melt viscosity obtained at this time was described as "Melt viscosity (280°C)" in Table 2.

After that, melt viscosity was measured with a capillary flow tester [Capirograph 1C: manufactured by Toyo Seiki Seisaku-sho, Ltd. (JP)] under conditions in conformity with ISO 1133, and at an apparent shear rate of 15 s-1 which was measured at a cylinder temperature of 240°C. The value was described as "Melt viscosity (240°C)" in Table 2.

Then, as with Example 1, the obtained pellets were subjected to the sheet extrusion. The condition of die drool generation around the die was examined based on the same criteria for evaluation. The obtained sheet was used to evaluate vacuum formability and drawdown property. The results are shown in Table 2. Incidentally, it was impossible to measure the melt viscosities at 240°C in Examples 10 and 11 because of a load greater than the measurement limit of the capillary flow tester.

Furthermore, in regard to Examples 5 and 8, the temperature of a molten resin at a T-die portion at the time of the sheet extrusion was actually measured with a contact type thermocouple. The molten resin temperature in Example 5 was 294°C, and in Example 8 was 332°C.

Table 2

| | | Example 5 Present Invention | Example 6 Present Invention | Example 7 Present Invention | Example 8 Comparative Example | Example 9 Present Invention | Example 10 Present Invention | Example 11 Present Invention | Example 12 Present Invention |
|---|---|---|---|---|---|---|---|---|---|
| Fed from feed opening on the upstream side | | | | | | | | | |
| PPE | | 40 | 40 | 40 | 40 | 40 | 40 | 40 | 40 |
| | | 10 | 10 | 10 | 10 | 10 | 10 | 10 | 10 |
| MAH | | 0.3 | 0.3 | 0.3 | 0.3 | 0.3 | 0.3 | 0.3 | 0.3 |
| Fed from first feed opening on the downstream side | | | | | | | | | |
| PA66a | | | 8 | | | 2 | 10 | 20 | 5 |
| PA66b | | 5 | | | | | | | |
| PA12 | | | | | | | | | 15 |
| PA6a | | 20 | 12 | 20 | | 18 | 10 | | |
| PA6b | | 25 | 30 | 30 | 50 | 30 | 30 | 30 | 30 |
| Filler 1 | | 4 | 4 | 4 | 4 | 4 | 4 | 4 | 4 |
| Average ηr of polyamide | | 3.91 | 4.05 | 4.03 | 4.88 | 4.04 | 4.03 | 4.03 | 4.03 |
| Izod impact strength | $kJ/m^2$ | 72 | 79 | 80 | 58 | 68 | 32 | 29 | 38 |
| Melt viscosity (240°C) | Pa·s | 199500 | 174500 | 31820 | 94000 | 35000 | not measurable | not measurable | 183400 |
| Melt viscosity (280°C) | Pa·s | 6540 | 5680 | 2670 | 7700 | 2700 | 6300 | 7200 | 5210 |
| Condition of die drool generation | - | AAA | AA | AA | B | AA | A | A | A |
| Drawdown property | mm | 4.1 | 5.0 | 22 | 4.2 | 20 | 3.9 | 4.2 | 6.7 |
| Vacuum formability | | Good | Good | Good | Good | Good | - | - | Good |

(continued)

| | | | | | | | | |
|---|---|---|---|---|---|---|---|---|
| Fed from first feed opening on the downstream side | | | | | | | | |
| Presence or absence of hole or crack | None | None | None[*a] | None | None | - | - | None |
| Presence or absence of wrinkle | None | None | Wrinkle-like form is recognized | None | Wrinkle-like form is recognized | - | - | None |
| Presence or absence of mark of vacuum hole | None | None | None | None | None | - | - | None |
| *a: There was no hole, but a corner had a thin thickness portion. | | | | | | | | |

In comparison with Example 8 (Comparative Example), it has been established that in Examples 6 and 7 (Examples) which are thermoplastic resin compositions according to the present invention, drawdown property is considerably improved and vacuum formability is remarkably improved without deteriorating impact resistance and the condition of die drool generation only by adding a small amount of the high melting polyamide.

Examples 13, 14 and 16 (Present Invention), and Example 15 (Comparative Example)

There was used ZSK40SC (manufactured by Coperion Werner & Pfleiderer GmbH & Co. KG, Germany) that has one feed opening on the upstream side and two feed openings on the downstream side, and a ratio (L/D) of 48. The number of barrels is 12 (L/D per a barrel is 4), and there were placed the feed opening on the upstream side at the 1st barrel; the first feed opening on the downstream side at the 6th barrel; the second feed opening on the downstream side at the 8th barrel; and vent ports for removing volatile constituent by reduced pressure suction at the 5th barrel and 10th barrel respectively. The maximum cylinder temperature was set at 320°C. From the feed opening on the upstream side, the first feed opening on the downstream side and the second feed opening on the downstream side were fed the following materials in the proportions shown in Table 3. Feed Opening on the Upstream Side: PPE, SEBS, and MAH First Feed Opening on the Downstream Side, and Second Feed Opening on the Downstream Side:

PA6a; PA6b; a polyamide 6 [PA6 having ηr = 4.00, (concentration of end amino groups [NH2])/(concentration of end carboxyl groups [COOH] = 0.74)] (hereafter, abbreviated simply as PA6d); and filler 1

Then melt-kneading was conducted, strands were water-cooled, and pelletized. A screw revolution was 300 rpm and a rein feed rate was 45 kg/h at the time of the melt-kneading. Reduced pressure suction was conducted at the 5th barrel and 10th barrel for the purpose of removing volatile constituent.

At this time, the temperature of a molten resin that was being extruded from a die was measured with a contact type thermocouple, and the torque of a motor at the time of extrusion was recorded. Each motor torque was shown as a relative value to 100% of the motor rated capacity. The lower the motor torque is when compared at the same discharge rate, the more the output per time becomes. The resin temperatures and motor torques obtained at this time are shown in Table 3 as "Resin temperature on extrusion" and "Torque on extrusion", respectively.

The ηr of the polyamide that was used as a material was measured in accordance with JIS K-6920-1: 2000 (a measurement temperature of 25°C. 98% by weight sulfuric acid, concentration of 1 g/100 $cm^3$, and an Ostwald viscometer). In addition, the ηr of the polyamide mixture (described as "Average ηr of polyamide" in Table 1) was measured as with above, by using a solution of the polyamide mixture in which each polyamide 6 used as the material was dissolved at a concentration of 1 g/100 $cm^3$ and mixed to have a composition depending on the blending proportions.

As with Example 1, the obtained pellets were subjected to injection molding to provide a universal test piece described in ISO294-1 and a flat plate molded piece with 150 mm by 150 mm by 2 mm. Izod impact strength in the edgewise direction was measured. As with Example 1, melt viscosity was measured with a rheometer at 280°C. The melt viscosity obtained at this time was described as "Melt viscosity (280°C)" in Table 3.

In addition, as with Example 5, melt viscosity was measured at a temperature of 240°C, and at a shear rate of 15 $s^{-1}$. The value was described as "Melt viscosity (240°C)" in Table 3.

Then, as with Example 1, the obtained pellets were subjected to the sheet extrusion. The condition of die drool generation around the die was examined based on the same criteria for evaluation. The obtained sheet was used to evaluate vacuum formability and drawdown property. The results are shown in Table 3.

Furthermore, in regard to Examples 13 and 16 (Examples), and Example 15 (Comparative Example), the temperature of a molten resin at a T-die portion at the time of the sheet extrusion was actually measured with a contact type thermocouple. The molten resin temperature in Example 13 was 297°C, in Example 16 was 286°C, and in Example 15 was 327°C.

[Table 3]

| | Example 13 Present Invention | Example 14 Present Invention | Example 15 Comparative Example | Example 16 Present Invention |
|---|---|---|---|---|
| Fed from feed opening the upstream side | | | | |
| PPE | 40 | 40 | 40 | 40 |
| SEBS | 10 | 10 | 10 | 10 |
| MAH | 0.3 | 0.3 | 0.3 | 0.3 |

(continued)

| | | | | | |
|---|---|---|---|---|---|
| Fed from first feed opening the downstream side | | | | | |
| PA6a | | 20 | 20 | | 12 |
| PA6b | | | 30 | | |
| PA6c | | | | 50 | |
| PA66a | | | | | 8 |
| Fed from second feed opening on the down | | | | | |
| PA6b | | 30 | | | 30 |
| Filler 1 | | 4 | 4 | 4 | 4 |
| Average ηr of polyamide | | 4.02 | 4.02 | 4.00 | 4.01 |
| Resin temperature on extrusion | °C | 338 | 345 | 352 | 335 |
| Torque on extrusion | % | 74~78 | 78~81 | 86~90 | 73~75 |
| Izod impact strength | $kJ/m^2$ | 78 | 60 | 55 | 81 |
| Melt viscosity (280°C) | Pa·s | 7190 | 6830 | 3240 | 7190 |
| Melt viscosity (240°C) | Pa.s | 53000 | 47000 | 43000 | 254000 |
| Condition of die drool generation | - | AAA | A | B | AAA |
| Drawdown property | mm | 6.2 | 12 | 18 | 4.9 |
| Vacuum formability | | Good | Good | Poor | Good |
| Presence or absence of hole or crack | | None | None(*a) | None(*b) | None |
| Presence or absence of wrinkle | | None | None | Lots of large wrinkles | None |
| Presence or absence of mark of vacuum hole | | None | None | None | None |

*a: There was no hole, but a corner had a thin thickness portion.
*b: There was no hole, but several corners had a thin thickness portions.

Example 17 (Present Invention)

This example is shown as an example using a high discharge rate capable extruder (Mega compounder type extruder), which is intended to represent actual manufacturing.

There was used an extruder ZSK40MC (manufactured by Coperion Werner & Pfleiderer GmbH & Co. KG, Germany) that has one feed opening on the upstream side and two feed openings on the downstream side, and an L/D of 48. The number of barrels is 12 (L/D per a barrel is 4), and there were placed the feed opening on the upstream side at the 1st barrel; the first feed opening on the downstream side at the 6th barrel; the second feed opening on the downstream side at the 8th barrel; and vent ports for removing volatile constituent by reduced pressure suction at the

5th barrel and 10th barrel respectively. The maximum cylinder temperature was set at 320°C. From the feed opening on the upstream side, the first feed opening on the downstream side and the second feed opening on the downstream side were fed the following materials in the proportions shown in Table 4.

Feed Opening on the Upstream Side: 45 parts by weight of PPE, 10 parts by weight of SEBS, and 0.3 parts by mass of MAH
First Feed Opening on the Downstream Side: 5 parts by weight of PA6a
Second Feed Opening on the Downstream Side: 25 parts by weight of PA6b and filler 1
Then melt-kneading and extrusion were conducted. Strands were cooled with a water-spraying conveyer belt, and cut with a strand cutter to pelletize.

At this time, a screw revolution was 500 rpm and a resin feed rate was 150 kg/h. At this time, the operating condition parameter P was $7.8 \times 10^{-5}$ kg·cm$^3$. A die was selected so that a discharge rate per unit opening area of the die opening and unit time was 198 kg/hr·cm$^2$. Reduced pressure suction was conducted at the 5th barrel and 10th barrel for the purpose of removing volatile constituent.

The screw of the extruder at this time had three kneading blocks. The first kneading block (a step of melting a polyphenylene ether) was located at the 4th barrel of the extruder, and the kneading block comprised, from the upstream side, one R-KD having a L of 36 mm, one N-KD having a L of 36 mm, and one L-KD having a L of 18 mm. The first kneading block had an L/D of 2.25. The second kneading block was located at the 6th barrel of the extruder, and the kneading block comprised, from the upstream side, one R-KD having a L of 36 mm, one L-KD having a L of 18 mm, and one R-KD having a L of 18 mm. The second kneading block had an L/D of 1.8. The third kneading block was located at the 9th barrel of the extruder, and the kneading block comprised, from the upstream side, one R-KD having a L of 36 mm and one L-KD having a L of 18 mm. The third kneading block had an L/D of 1.35.

In addition, one L-KD having a L of 18 mm was placed at the position between the 4th barrel and the 5th barrel, and at the position between the 5th barrel and the 6th barrel, respectively.

At the time of extrusion, there were evaluated the presence or absence of surging, the resin temperature at the die nozzle, discoloring of pellets, and the condition of die drool generation (resinrich area generated around the die opening at the time of extrusion). The presence or absence of surging was examined by the presence or absence of fluctuations of the strand diameter. The resin temperature at the die nozzle was actually measured with a contact type thermocouple thermometer. Incidentally, the resin temperature was measured three times, and the highest value was used. The discoloring of pellets was evaluated by difference of color from a pellet used as a reference which was obtained by cooling in water a strand extruded from the die of an extruder and cutting the strand. Incidentally, the color of the pellet used as the reference was white. The condition of die drool generation was evaluated by relative comparison of the size of generated die drool (the size of die drool generated after operation for about 30 minutes). The results are shown in Table 4.

Example 18 (Present Invention)

This Example was conducted as with Example 17 except that the screw revolution of the extruder was changed to 750 rpm. Incidentally, the operating condition parameter P at this time was $5.2 \times 10^{-5}$ kg·cm$^3$. As with Example 17, there were evaluated the presence or absence of surging, the resin temperature at the die nozzle, discoloring of pellets, and the condition of die drool generation. The results are shown in Table 4.

Example 19 (Present Invention)

This Example was conducted as with Example 17 except that discharge rate of the extruder was changed to about 220 kg/hr.
The operating condition parameter at this time was $1.2 \times 10^{-4}$ kg·cm$^3$. Furthermore, the die was not changed in changing discharge rate, and thus discharge rate per unit opening area of the die opening and unit time was 289 kg/hr·cm$^2$. As with Example 17, there were evaluated the presence or absence of surging, the resin temperature at the die nozzle, discoloring of pellets, and the condition of die drool generation. The results are shown in Table 4. At extrusion, the surging phenomenon to some degree was observed.

Example 20 (Present Invention)

This Example was conducted just as with Example 17 except that the first kneading block of the screw of the extruder was changed to have an L/D of 4.5 (comprising, from the upstream side, one R-KD having a L of 54 mm, two R-KDs having a L of 36 mm, one N-KD having a L of 36 mm, and one L-KD having a L of 18 mm). The results are shown in Table 4.

Example 21 (Present Invention)

This Example was conducted just as with Example 17 except that the second kneading block of the screw of the extruder was changed to have an L/D of 4.5 (comprising, from the upstream side, one R-KD having a L of 54 mm, two R-KDs having a L of 36 mm, one N-KD having a L of 36 mm, and one L-KD having a L of 18 mm); the third kneading block was removed; and PA6b was fed from the first feed opening on the downstream side as with PA6a. The results are shown in Table 4.

The obtained pellets in Examples 17 and 21 were molded into a universal test piece described in ISO294-1 and a flat plate molded piece with 150 mm by 150 mm by 2 mm with an injection molding machine (IS80EPN manufactured by TOSHIBA MACHINE CO., LTD.) at a molten resin temperature of 290°C and at a mold temperature of 90°C. The pieces were left at rest in an aluminum moistureproof bag at 23°C for 48 hours. After that, Izod impact strength of the piece in the edgewise direction was measured in accordance with ISO179-1993 at 23°C.

The Izod impact strength of the sample of Example 17 was 763 J/m while that of Example 21 was 559 J/m.

In addition, in order to evaluate sheet extrudability, the sheet extrusion was conducted with a monoaxial sheet extruder by which sheets about 15 cm wide can be molded. The cylinder preset temperature and the die preset temperature of the sheet extruder at this time were 280°C. The sheet extrusion was conducted with pellets of Example 17 to provide an excellent sheet having a width of about 140 to 145 mm, a thickness of about 0.4 mm and a length of about 300 mm.

[Table 4]

| | Example 17 | Example 18 | Example 19 | Example 20 | Example 21 |
|---|---|---|---|---|---|
| Fluctuations of strand diameter (Surging) | None | None | 4 ~ 6 mm | None | None |
| Resin temperature | 323 | 346 | 334 | 343 | 364 |
| Discoloring of strand | None (White) | None (White) | None (White) | Discoloration to yellow | Discoloration to brown |
| Condition of die drool generation | None | about 2 mm | None | about 3 mm | about 10 mm (*a) |
| *a: Generated die drool often entered into strands and were carried into product. | | | | | |

Brief Description of the Drawings

Figure 1 is a schematic view of a cup-shaped vacuum molded piece used in Examples according to the present invention; and

Figure 2 is a schematic view describing the drawdown that is mentioned in the present invention.

Description of Symbols

a heater
b sheet
c sheet retaining portion
d drawdown phenomenon

Industrial Applicability

The present invention provides a resin composition that has good sheet extrudability and an extremely excellent vacuum formability, and further has a high impact strength; and a shaped article (a film, a sheet, and the like) composed of the resin composition. In addition, the present invention also provides a method for manufacturing the composition in which the composition is processed at considerably reduced resin temperature. The shaped articles obtained by vacuum forming, pressure molding, press molding, and the like are applicable to various kinds of usages. Specifically,

examples of the applications are a housing of various machines or electronic equipment such as a computer; interior and exterior equipment of vehicles (a front grille, a headlamp housing, a rear spoiler, a side spoiler, a dash board, and the like); parts in an engine room (a housing of a battery, and the like); masking parts for coating; industrial trays; trays used for conveying electronic components; vending machine-compliant trays; slide blisters; and the like. Among these applications, the shaped articles are particularly suitable for interior and exterior equipment of vehicles (a front grille, a headlamp housing, a rear spoiler, a side spoiler, a dash board, and the like); parts in an engine room (housing of a battery, and the like); and masking parts for coating.

## Claims

1. A resin composition comprising a polyamide, a polyphenylene ether, an elastomer, and an inorganic filler having a mean particle diameter of 0.05 to 1 μm, **characterized in that** the polyamide is a polyamide mixture of two or more polyamides each having a different relative viscosity, the polyamide mixture has a larger content of the polyamide having a higher relative viscosity than that of the polyamide having a lower relative viscosity, and the polyamide mixture has a relative viscosity of 3.3 to 5.0.

2. The resin composition according to claim 1, wherein the polyamide having a higher relative viscosity has a relative viscosity more than 3.5 and not more than 6.0.

3. The resin composition according to claim 1, wherein the polyamide having a lower relative viscosity has a relative viscosity not less than 2.0 and not more than 3.5.

4. The resin composition according to claim 1, wherein the inorganic filler is at least one selected from the group consisting of metallic oxides and sulfides of titanium, iron, copper, zinc, aluminum, and silicon.

5. The resin composition according to claim 1, wherein the inorganic filler is at least one selected from the group consisting of titanium oxide, silicon oxide, silica, alumina, zinc oxide, and zinc sulfide.

6. The resin composition according to claim 1, wherein the polyamide mixture comprises a low melting polyamide having a melting point not less than 150°C and less than 250°C, and a high melting polyamide having a melting point not less than 250°C and not more than 350°C.

7. The resin composition according to claim 6, wherein the polyamide mixture has a 5 to 18 mass % content of the high melting polyamide relative to 100 mass % of the polyamide mixture.

8. The resin composition according to claim 6, wherein the low melting polyamide comprises at least a polyamide 6.

9. The resin composition according to claim 6, wherein the high melting polyamide comprises at least a polyamide 6, 6.

10. The resin composition according to claim 6, wherein the high melting polyamide has a relative viscosity not less than 2.0 and not more than 3.5.

11. The resin composition according to claim 6, wherein the low melting polyamide has a relative viscosity more than 3.5 and less than 6.0.

12. The resin composition according to claim 1, wherein said resin composition comprises 30 to 60 parts by mass of the polyamide, 30 to 60 parts by mass of the polyphenylene ether, and 5 to 30 parts by mass of the elastomer, relative to 100 parts by mass of the total of the polyamide, the polyphenylene ether, and the elastomer.

13. The resin composition according to claim 1, wherein the amount of the inorganic filler is 3 to 6 parts by mass relative to 100 parts by mass of the total of the polyamide, the polyphenylene ether, and the elastomer.

14. The resin composition according to claim 1, wherein the inorganic filler has a mean particle diameter in the range of 100 to 500 nm.

15. The resin composition according to claim 1, having a melt viscosity (in conformity with ISO 1133) not less than $1 \times 10^4$ Pa·s and less than $1 \times 10^7$ Pa·s, as measured at 240°C and 15 $s^{-1}$.

**16.** The resin composition according to claim 6, wherein a proportion of a melt viscosity at 240°C to a melt viscosity at 280°C is 10.0 or higher.

**17.** The resin composition according to claim 1, further comprising a conductive carbon filler.

**18.** The resin composition according to claim 1, for use in extrusion.

**19.** The resin composition according to claim 1, for use in sheet extrusion.

**20.** A resin composition comprising a polyamide, a polyphenylene ether, and an elastomer, **characterized in that** the polyamide is a polyamide mixture of two or more polyamides each having a different relative viscosity, the polyamide mixture has a larger content of the polyamide having a higher relative viscosity than that of the polyamide having a lower relative viscosity, and the polyamide mixture has a relative viscosity of 3.3 to 5.0.

**21.** A resin composition comprising a polyamide and a polyphenylene ether, **characterized in that** the polyamide is a polyamide mixture consisting of a low melting polyamide having a melting point not less than 200°C and less than 250°C, and a high melting polyamide having a melting point not less than 250°C and not more than 300°C; the polyamide mixture has a relative viscosity of 3.3 to 5.0, and the polyamide mixture has a 5 to 18 mass % content of the high melting polyamide relative to 100 mass % of the polyamide mixture.

**22.** A sheet having a width greater than 60 cm, obtained by subjecting the resin composition according to claim 1 to sheet extrusion.

**23.** The sheet according to claim 22, having a thickness of 100 to 700 μm.

**24.** A method for manufacturing a sheet comprising the resin composition according to claim 1, **characterized in that** the sheet is extruded at a molten resin temperature not less than 270°C and not more than 320°C at a T-die.

**25.** A shaped article obtained by subjecting a sheet comprising of the resin composition according to claim 1 to vacuum forming.

**26.** A method of subjecting a sheet comprising the resin composition according to claim 1 to vacuum forming, wherein a resin temperature at the time of vacuum forming is not less than 150°C and less than 250°C.

**27.** A shaped article for use in masking in coating automobiles, obtained by subjecting the sheet according to claim 1 to vacuum forming.

**28.** A method for manufacturing a resin composition comprising a polyamide, a polyphenylene ether, and an elastomer, **characterized in that** the polyamide is a polyamide mixture of two or more polyamides each having a different relative viscosity, the polyamide mixture has a larger content of the polyamide having a higher relative viscosity than that of the polyamide having a lower relative viscosity, the polyamide mixture has a relative viscosity of 3.3 to 5.0, and the method comprising:

a first step of manufacturing a first premixture by melt-kneading at least the polyphenylene ether and the elastomer;
a second step of manufacturing a second premixture by melt-kneading at least the first premixture and the polyamide having a lower relative viscosity; and
a third step of melt-kneading at least the second premixture and the polyamide having a higher relative viscosity.

**29.** The manufacturing method according to claim 28, **characterized in that** the first step, the second step, and the third step are conducted continuously in a single twin-screw extruder.

**30.** The method for manufacturing a resin composition according to claim 28, wherein in the polyamide mixture of two or more polyamides each having a different relative viscosity, the polyamide having a lower relative viscosity has a relative viscosity not less than 2.0 and not more than 3.5, and the polyamide having a higher relative viscosity has a relative viscosity more than 3.5 and not more than 6.0.

**31.** The method for manufacturing a resin composition according to claim 28, wherein the melt-kneading in the third

step is conducted by further adding an inorganic filler having a mean particle diameter of 0.05 to 1 μm which is one or more selected from the group consisting of titanium oxide, silicon oxide, silica, alumina, zinc oxide, and zinc sulfide.

**32.** The method for manufacturing a resin composition according to claim 28, wherein a resin temperature at the time of the melt-kneading in a die nozzle of an extruder is not less than 300°C and not more than 340°C.

**33.** A method for manufacturing a resin composition comprising a polyamide, a polyphenylene ether, and an elastomer with a twin-screw extruder, **characterized in that** the method comprises:

a first step of manufacturing a first premixture by melt-kneading at least the polyphenylene ether and the elastomer; and

a second step of melt-kneading at least the first premixture and the polyamide,

wherein an extruder used in the second step has at least one kneading block comprising a plural of screw elements, and the kneading block has an L/D in the range of 1.0 to 3.0 where L is the length of a screw constituting the kneading block in the direction of a screw axis, and D is the diameter of the screw constituting the kneading block.

**34.** The method for manufacturing a resin composition according to claim 32, **characterized in that** the second step comprises at least two kneading blocks, the kneading blocks are separated from each other by a carrier block having an L/D of 2.0 or higher, and each kneading block has an L/D in the range of 1.0 to 3.0.

**35.** The method for manufacturing a resin composition according to claim 32, wherein the first step comprises at least one kneading block, the kneading block comprises a plural of screw elements, and the kneading block has an L/D in the range of 1.0 to 8.0.

**36.** The method for manufacturing a resin composition according to claim 33, **characterized in that** the extruder has an operating condition parameter P in the range of $5 \times 10^{-5}$ to $5 \times 10^{-4}$ [$kg \cdot cm^3$] given by

$$P = (Q/D^3)/N$$

where Q [kg/minute] is a discharge rate of the extruder; D [cm] is a screw diameter of the extruder; N [$minute^{-1}$] is a screw revolution of the extruder; and P is the operating condition parameter.

**37.** The method for manufacturing polyamide/polyphenylene ether according to claim 33, wherein the plural of screw elements constituting the kneading block has at least one screw element having a sealing capability.

**38.** The method for manufacturing a resin composition according to claim 33, wherein a discharge rate per unit opening area of a die opening and unit time is not less than 100 $kg/hr \cdot cm^2$ and less than 300 $kg/hr \cdot cm^2$.

[Figure 1]

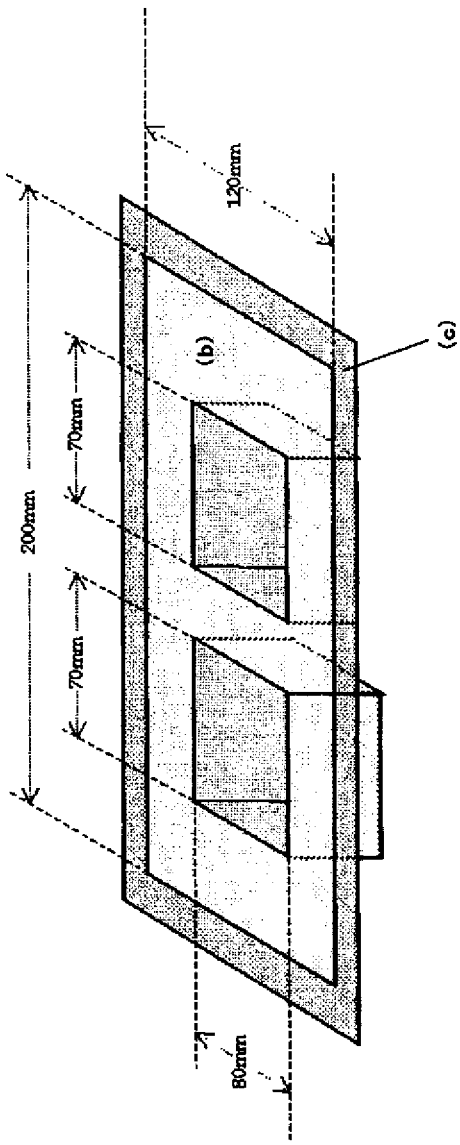

[Figure 2]

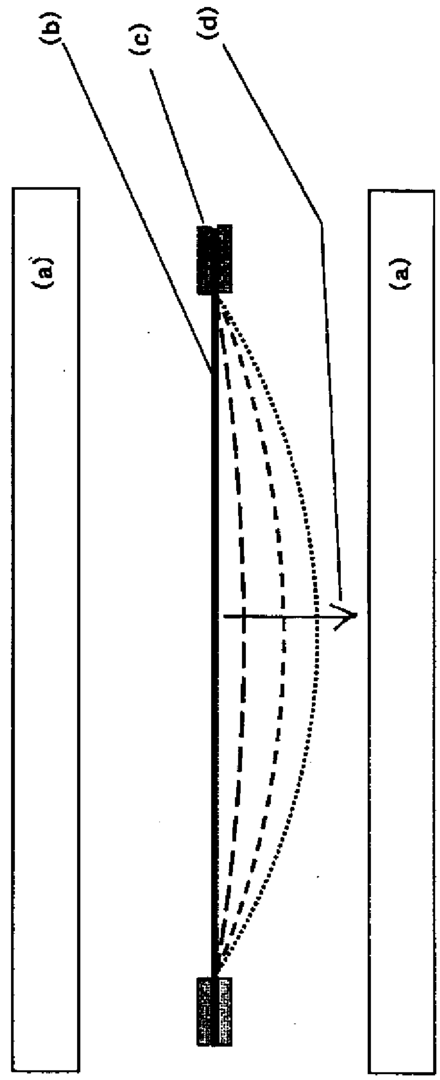

**INTERNATIONAL SEARCH REPORT**

International application No. PCT/JP2005/021476

A. CLASSIFICATION OF SUBJECT MATTER
*C08L77/00*(2006.01), *B29B7/38*(2006.01), *B29C47/00*(2006.01), *C08K3/00*(2006.01), *C08L71/12*(2006.01), *C08L77/06*(2006.01), *B29K71/00*(2006.01), *B29K77/00*(2006.01)
According to International Patent Classification (IPC) or to both national classification and IPC

B. FIELDS SEARCHED
Minimum documentation searched (classification system followed by classification symbols)
C08L77/00-77/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2-28254 A (Toray Industries, Inc.), 30 January, 1990 (30.01.90), Claims; page 2, lower right column, line 8 to page 3, lower left column, line 2; page 3, lower left column, line 15 to lower right column, line 1; page 4, lower left column, line 2 to lower right column, line 6; page 7, Table 1, example 8<br>& EP 0333408 A1 & US 4981920 A | 21<br>1-20,22-32, 34,35 |
| X<br>Y | JP 2002-206054 A (Sumitomo Chemical Co., Ltd.), 26 July, 2002 (26.07.02), Claim 1; Par. Nos. [0044] to [0047], [0050], [0055]<br>(Family: none) | 33,36,38<br>37 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 January, 2006 (20.01.06) | 31 January, 2006 (31.01.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2005/021476

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-98635 A (Mitsubishi Chemical Corp.), 02 April, 2004 (02.04.04), Par. No. [0025] (Family: none) | 37 |
| A | Edited by Purasuchikku Daijiten Henshu Iinkai, "Plastic Daijiten", 2nd edition, Kogyo Chosakai Publishing Co., Ltd., 2001, page 456, right column, lines 3 to 15 | 33 |
| A | JP 2004-107488 A (Asahi Kasei Chemicals Corp.), 08 April, 2004 (08.04.04), Claims 1 to 3; Par. Nos. [0021], [0022], [0026], [0027] (Family: none) | 1-20,22-32, 34,35 |
| A | JP 9-169903 A (Sumitomo Chemical Co., Ltd.), 30 June, 1997 (30.06.97), Claims 1 to 6, 9; Par. Nos. [0049], [0051], [0067], [0068], [0077], [0083] (Family: none) | 1-20,22-32, 34,35 |
| A | JP 1-12770 B2 (Sumitomo Chemical Co., Ltd.), 02 March, 1989 (02.03.89), Claims; page 2, right column, lines 33 to 39; page 3, right column, lines 2 to 11 (Family: none) | 1-20,22-32, 34,35 |
| A | JP 4-342760 A (Teijin Kasei Kabushiki Kaisha), 30 November, 1992 (30.11.92), Claim 1; Par. Nos. [0001], [0003], [0030] (Family: none) | 1-20,22-32, 34,35 |

Form PCT/ISA/210 (continuation of second sheet) (April 2005)

**INTERNATIONAL SEARCH REPORT**

International application No.
PCT/JP2005/021476

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

This international application contains the following three inventions.
Group 1: claims 1-20, 22-32, 34, 35
Group 2: claim 21
Group 3: claims 33, 36-38

The technical feature common to the inventions of Group 1 and Group 2 is being a resin composition containing a polyamide and a polyphenylene ether. This technical feature, however, is not novel as disclosed in, for example, document JP 2-28254 A. The invention of Group 3 relates to a method for producing a resin composition containing a polyamide, a polyphenylene ether and an elastomer, but does not relate to (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.
PCT/JP2005/021476

Continuation of Box No.III of continuation of first sheet(2)

a method for producing the resin composition of the invention of Group 1.

Consequently, these three groups of inventions cannot be considered as a group of inventions so linked as to form a single general inventive concept.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8034917 A
- JP 1163262 A
- JP 52017880 A
- US 3306874 A
- US 3306875 A
- US 3257357 A
- US 3257358 A
- JP 50051197 A
- JP 63152628 A
- WO 02094936 A
- JP 8008869 A
- JP 9124926 A
- WO 9423433 A
- JP 2201811 A
- JP 3009104 A